# NEUE EUROPÄISCHE PATENTSCHRIFT

(11) **EP 1 043 357 B2**
(45) Veröffentlichungstag und Bekanntmachung des Hinweises auf die Entscheidung über den Einspruch: **25.10.2017**
(45) Hinweis auf die Patenterteilung: 11.08.2004
(21) Anmeldenummer: 00106928.5
(22) Anmeldetag: 31.03.2000
(51) Int. Cl.: C08K 5/54

(54) **Kautschukmischungen**
Rubber compositions
Compositions de caoutchouc

(30) Priorität: 03.04.1999 DE 19915281
(43) Veröffentlichungstag der Anmeldung: 11.10.2000
(73) Patentinhaber: Evonik Degussa GmbH, 45128 Essen (DE)
(72) Erfinder: Luginsland, Hans-Detlef, Dr., 50968 Köln (DE)
(74) Vertreter: Hartz, Nikolai

(56) Entgegenhaltungen:
- EP-A- 0 680 997
- EP-A- 0 732 362
- EP-A- 0 785 206
- EP-A- 0 864 605
- EP-A1- 0 680 997
- EP-A1- 0 732 362
- EP-A1- 0 785 206
- EP-A1- 0 785 207
- EP-A1- 0 795 577
- EP-A1- 0 845 493
- EP-A2- 0 864 605
- DE-A- 2 212 239
- US-A- 3 873 489
- US-A- 3 978 103
- US-A- 4 229 333
- US-A- 4 820 751
- US-A- 5 684 171
- DATABASE WPI Week 198733, Derwent Publications Ltd., London, GB; AN 1987-232026 & JP 62 156 148 A (ASICS CORP) 11 Juli 1987
- International Rubber Conference, 13-15 Oct. 1992
- HUNSCHE A. ET AL: 'Investigations concerning the reaction Silica/Organosilane and Organosilane/Polymer' KGK KAUTSCHUK GUMMI KUNSTSTOFFE Bd. 50. JAHR, Nr. 12, 1997, Seiten 881 - 889
- HUNSCHE A. ET AL: 'Investigations on the reaction Silica/Organosilane and Organosilane/Polymer1' KGK KAUTSCHUK GUMMI KUNSTSTOFFE Bd. 51. JAHR, Nr. 7-8, 1998, Seiten 525 - 533
- TERRELL P. ET AL: 'PONS Collins', 1991, GROSSWÖRTERBUCH- ERNST KLETT VERLAG FÜR WISSEN UND BILDUNG, STUTTGART Seite 388
- BUDAVARI S. ET AL: 'The Merck Index', Bd. 12TH ED., 1996, MERCK RESEARCH LABORATORIES DIVISION Seite 8635

## Beschreibung

Die vorliegende Erfindung betrifft Kautschukmischungen sowie Formkörper.

Es ist bekannt, schwefelhaltige Organosiliciumverbindungen, wie 3-Mercaptopropyltrimethoxysilan, 3-Thiocyanatopropytriethoxysilan oder Bis-(3-[Triethoxysilyl]-propyl)tetrasulfan als Silanhaftvermittler oder Verstärkungsadditiv in oxidisch gefüllten Kautschukmischungen, unter anderem für die Herstellung von Laufflächen und andere Teile von Autoreifen einzusetzen (DE 2 141 159, DE 2 212 239, DE 195 444 69 A1, US 3 978 103, US 4 048 206, EP 784 072 A1).

Zudem ist die zusätzliche Verwendung von Alkylsilanen in Kautschukmischungen um die Mischungsviskosität abzusenken bekannt (EP 795 577 A1, EP 864 605 A2).

Bei der Herstellung von Kautschukmischungen mit Organosilanen und einem Füllstoff, beispielsweise einer gefällten Kieselsäure, vollzieht sich während des Mischprozesses, beispielsweise in einem Innenmischer, eine chemische Reaktion. Bei dieser chemischen Reaktion handelt es sich um eine Kondensationsreaktion, die mit einer erheblichen Freisetzung von Alkohol verbunden ist. Wie in der Literatur beschrieben [A.Hunsche, U.Görl, A.Müller, M. Knaack, T.Göbel, Kautsch. Gummi, Kunstst. 50, 881 (1997)], setzt sich diese Kondensationsreaktion aus einer Primärreaktion, bei der eine Ethoxygruppe mit einer Silanolgruppe der Kieselsäure reagiert, und einer Sekundärreaktion zwischen zwei Ethoxygruppen, die zu einer Quervernetzung zwischen den Silanmolekülen führt, zusammen. Durch diese Reaktionen können bei der Verwendung von triethoxyfunktionalisierten Silanen, nach dem Stand der Technik, bis zu drei Mol Ethanol pro Mol Silizium abgespalten werden.

Dieser abgespaltene Alkohol verursacht teilweise erhebliche technische Probleme bei der Weiterverarbeitung der Kautschukmischungen, wie Mischungsporosität bei der Extrusion oder unerwünschter Blasenbildung im Kautschuk selbst. Desweiteren ist eine Reduktion der Freisetzung von Alkohol während der Umsetzung aus Gesundheits- und Umweltsgründen erwünscht.

Es wurde nun gefunden, daß diese Nachteile des Standes der Technik durch den Einsatz von Organosilanen, die anstatt der bisher verwendeten Trialkoxysilylfunktion Silylfunktionen mit weniger Alkoxygruppen besitzen, stark reduziert werden können.

Demgemäß betrifft die vorliegende Erfindung die Verwendung von Organosilanen der allgemeinen Struktur R¹R²R³Si-R⁴-Z (I), wobei das Organosilan weniger als 3 Ethoxygruppen pro Silizium aufweisen kann.

Gegenstand der Erfindung sind Formkörper gemäß Anspruch 1 sowie Kautschukmischungen gemäß Anspruch 3, welche dadurch gekennzeichnet sind, daß sie Organosilane der allgemeinen Struktur

R¹R²R³Si-R⁴-Z (I)

worin R¹= Ethoxy, R²=R³= Methyl, R⁴= Propyl oder Isobutyl, und Z= Sx-R⁴-SiR¹R²R³, wobei x im statistischen Mittel 2 bis 4 ist, enthalten, nämlich eines der beiden Organosilanpolysulfane Bis-(3-[dimethylethoxysilyl]-propyl)tetrasulfan und Bis-(3-[dimethylethoxysilyl]-propyl)disulfan.

Aufgrund der geringeren Anzahl an Alkoxygruppen in den Organosilanen der allgemeinen Struktur (I) reduziert sich die unangenehme Alkoholfreisetzung bei der Verwendung dieser in Kautschukmischprozessen. Verglichen mit der bekannten Arbeitsweise, beispielsweise durch einfache Verwendung von Bis-(3-[Triethoxysilyl]-propyl)-tetrasulfan (TESPT) als Haftvermittler verringert sich die maximal mögliche Alkoholentwicklung um 66 %.

Überraschenderweise wurde nur weiterhin gefunden, daß die mit den erfindungsgemäßen Silanen hergestellten Kautschukmischungen und die daraus hergestellten Vulkanisate gegenüber der Referenz mit einer Triethoxysilylfunktion, gemäß dem Stand der Technik, keine Nachteile hinsichtlich ihrer gummitechnischen Eigenschaften aufweisen (Beispiel 1 und 2).

Die Zugabe der erfindungsgemäßen Organosilane sowie die Zugabe der Füllstoffe erfolgt bevorzugt bei Massetemperaturen von 100 bis 200 °C, sie kann jedoch auch später bei tieferen Temperaturen (40 bis 100 °C) z.B. zusammen mit weiteren Kautschukhilfsmitteln erfolgen.

Die Organosilane können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.

Bevorzugt werden Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,3 bis 10 Gew.-Teile einer Verbindung der Formel (I), jeweils bezogen auf 100 Gew.-Teile Kautschuk, zur Herstellung der Mischungen eingesetzt.

Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte Lösungs SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind, enthalten.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die Organosilane mit kautschukreaktiven Gruppen können alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den Silanen der allgemeinen Struktur (I) kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

### Beispiele: Herstellung der Kautschukmischungen und Vulkanisate

### Allgemeine Durchführungsvorschrift

Die Gummimischung wird zweistufig in einem Innenmischer (Werner&Pfleiderer GK1.5N) mit einer Mischzeit von 6 und 5 Minuten bei einer Umdrehungszahl von 60-70 UPM bis zu einer Ausstoßtemperatur von maximal 155°C, gefolgt von einer Aufmischstufe in einem Innenmischer bei maximal 90°C, entsprechend der Rezeptur wie in folgender Tabelle 1 angegeben, hergestellt. Dabei bedeutet die Einheit phr Gewichtsanteile, bezogen auf 100 Teile des eingesetzten Rohkautschuks.

Allgemeine Verfahren zur Herstellung von Kautschukmischungen und deren Vulkanisate sind beispielsweise beschrieben in: "Rubber Technology Handbook", W. Hofmann, Hanser Verlag 1994.

Die Vulkanisationszeit bei 165°C beträgt für die Prüfkörper in Beispiel 1 16 min, für die in Beispiel 2 30 Minuten.

**Tabelle 1**

| Substanz | Menge [phr] |
|---|---|
| 1. Stufe | |
| Buna VSL 5025-1 | 96.0 |
| Buna CB 24 | 30.0 |
| Ultrasil VN3 | 80.0 |
| ZnO | 3.0 |
| Stearinsäure | 2.0 |
| Naftolen ZD | 10.0 |
| Vulkanox 4020 | 1.5 |
| Protector G35P | 1.0 |
| Silan | gemäß. Bsp.1, 2 |

| 2. Stufe | |
|---|---|
| Batch Stufe 1 | |

| 3. Stufe | |
|---|---|
| Batch Stufe 2 | |
| Perkacit TBZTD | 0.2 |
| Vulkacit D | 2.0 |
| Vulkacit CZ | 1.5 |
| Schwefel | 1.5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50±5 auf.

Bei dem Polymer Buna CB 24 handelt es sich um ein cis 1,4 Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität zwischen 39 und 49.

Die Kieselsäure VN3 der Degussa AG besitzt eine BET-Oberfläche von 175 m²/g. TESPD (Bis-(3-[Triethoxysilyl]-propyl)disulfan) aus dem Referenzbeispiel 1 wird gemäß Patent D 195 414 04 hergestellt. Das Silan aus Beispiel 2, Bis-(3-[Dimethylethoxysilyl]-propyl)disulfan, wird nach dem Stand der Technik durch die Hydrosilylierung von Chlordimethylsilan mit Allylchlorid, einer anschließenden Ethanolyse und Schwefelung analog zu dem in Patent D 197 342 95 A1 angegebenen Verfahren hergestellt.

Als aromatisches Öl wird Naftolen ZD der Chemetall verwendet. Bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG. Perkacit TBZTD ist ein Handelsprodukt der Flexis S.A..

Die gummitechnische Prüfung erfolgt gemäß den in Tabelle 2 angegebenen Prüfmethoden.

**Tabelle 2**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 0, 23 und 60°C | ASTM D 5308 |
| Viskoelast. Eigen., 0 und 60°C | DIN 53 513, ISO 2856 |
| E* | |
| tan δ | |
| DIN-Abrieb, 10 N Kraft | DIN 53 516 |
| Dispersion | ISO/DIS 11345 |

### Beispiele 1 und 2:

Die Durchführung der Beispiele 1 (Vergleichsbeispiel) und 2 erfolgt gemäß der Allgemeinen Durchführungsvorschrift.

In Abänderung zu Vergleichsbeispiel 1 mit 5.8 phr TESPD, wird der Mischung in Beispiel 2 4.3 phr Bis-(3-[Dimethylethoxysilyl]-propyl)disulfan, dies entspricht einer äquimolaren Dosierung, zugegeben. Folgende gummitechnische Daten für Rohmischung und Vulkanisat ergeben sich (Tabelle 3):

**Tabelle 3**

| **Rohmischung** | | | |
|---|---|---|---|
| Merkmal | Einheit | Bsp. 1 | Bsp. 2 |
| ML(1+4) (3.Stufe) | [ME] | 69 | 74 |
| **MDR, 165°C** | | | |
| Dmax-Dmin | [dNm] | 14,1 | 13,8 |
| t 10% | [min] | 2,4 | 3,1 |

| **Vulkanisat** | | | |
|---|---|---|---|
| Merkmal | Einheit | Bsp. 1 | Bsp. 2 |
| **Zugversuch am Ring** | | | |
| Zugfestigkeit | [MPa] | 16,3 | 17,1 |
| Spannungswert 100% | [MPa] | 1,5 | 1,6 |
| Spannungswert 300% | [MPa] | 6,2 | 6,4 |
| Bruchdehnung | [%] | 540 | 560 |
| Shore-A-Härte | [SH] | 60 | 59 |
| DIN-Abrieb | [mm³] | 100 | 110 |
| Ball-Rebound (0°C) | [%] | 12,5 | 11,6 |
| Ball-Rebound (23°C) | [%] | 34,3 | 32 |
| Ball-Rebound (60°C) | [%] | 59,8 | 59,4 |
| **Dynamische Prüfung** | | | |
| Dyn. Modul E* (0°C) | [MPa] | 16,7 | 17,1 |
| Dyn. Modul E* (60°C) | [MPa] | 7,3 | 7,3 |
| Verlust Modul tan δ (0°C) | [-] | 0,444 | 0,476 |
| Verlust Modul tan δ (60°C) | [-] | 0,143 | 0,131 |
| Dispersion | [-] | 6 | 6 |

Die Daten in Tabelle 3 belegen, daß bei der Verwendung des erfindungsgemäßen Dimethylethoxysilans (Bsp.2) keine Verschlechterung der gummitechnischen Eigenschaften gegenüber dem Triethoxysilan (Bsp.1) nach dem Stand der Technik zu verzeichnen ist. Vielmehr ist sogar ein Vorteil in dem abgesenkten tan δ (60°C)-Wert zu erkennen, der mit dem Rollwiderstand korreliert.

## Patentansprüche

1. Formkörper, erhältlich aus einer Kautschukmischung, die **dadurch gekennzeichnet ist, dass** sie 0.1 bis 15 Gew.-%, bezogen auf die Menge des eingesetzten Kautschuks, Organosilane der allgemeinen Struktur
R¹R²R³Si-R⁴-Z
worin R¹= Ethoxy, R²=R³ Methyl, R⁴=Propyl oder Isobutyl, und Z=Sₓ-R⁴-SiR¹R²R³, wobei x im statistischen Mittel 2 bis 4 ist, enthält, wobei die Kautschukmischung einen Synthesekautschuk, eine Kieselsäure als Füllstoff und eines der beiden Organosilanpolysulfane Bis-(3-[dimethylethoxysilyl]-propyl)tetrasulfan oder Bis-(3-[dimethylethoxysilyl]-propyl)disulfan enthält.

2. Formkörper gemäss dem Anspruch 1, ausgewählt aus einem Luftreifen und einer Reifenlauffläche.

3. Kautschukmischung, **gekennzeichnet dadurch, dass** sie 0.1 bis 15 Gew.-%, bezogen auf die Menge des eingesetzten Kautschuks, Organosilane der allgemeinen Struktur
R¹R²R³Si-R⁴-Z
worin R¹= Ethoxy, R²=R³ Methyl, R⁴=Propyl oder Isobutyl, und Z=Sₓ-R⁴-SiR¹R²R³, wobei x im statistischen Mittel 2 bis 4 ist, enthält, wobei die Kautschukmischung einen Synthesekautschuk, eine Kieselsäure als Füllstoff und eines der beiden Organosilanpolysulfane Bis-(3-[dimethylethoxysilyl]-propyl)tetrasulfan oder Bis-(3-[dimethylethoxysilyl]-propyl)disulfan enthält.

## Claims

1. Moulding, obtainable from a rubber mixture, which is **characterised in that** it contains 0.1 to 15 wt. %, based on the amount of rubber used, organosilanes with the general structure
R¹R²R³Si-R⁴-Z
wherein R¹= ethoxy, R² = R³ = methyl, R⁴ = propyl or isobutyl, and Z = Sₓ-R⁴-SiR¹R²R³, x having a statistical mean value of 2 to 4, wherein the rubber mixture contains a synthetic rubber, a silicic acid as filler and one of the following two organosilanepolysulfanes: bis-(3-[dimethylethoxysilyl]-propyl)tetrasulfane or bis-(3-[dimethylethoxysilyl]-propyl)disulfane.

2. Moulding according to claim 1, selected from a pneumatic tyre and a tyre tread.

3. Rubber mixture, **characterised in that** it contains 0.1 to 15 wt. %, based on the amount of rubber used, organosilanes with the general structure
R¹R²R³Si-R⁴-Z,
wherein R¹ = ethoxy, R² = R³ = methyl, R⁴ = propyl or isobutyl, and Z = Sₓ-R⁴-SiR¹R²R³, x having a statistical mean value of 2 to 4, wherein the rubber mixture contains a synthetic rubber, a silicic acid as filler and one of the following two organosilanepolysulfanes: bis-(3-[dimethylethoxysilyl]-propyl)tetrasulfane or bis-(3-[dimethylethoxysilyl]-propyl)disulfane.

## Revendications

1. Article moulé pouvant être obtenu à partir d'un mélange de caoutchoucs,
**caractérisé en ce qu'**
il renferme 0,1 à 15 % en poids par rapport à la quantité de caoutchoucs mise en oeuvre d'organosilanes de structure générale
R¹R²R³Si-R⁴-Z
dans laquelle R¹ représente un éthoxy, R² et R³ représentent un méthyl, R⁴ représente un propyl ou un isobutyle et Z représente Sₓ-R⁴-SiR¹R²R³,
x étant en moyenne statistique égal à 2 à 4, le mélange de caoutchoucs renfermant un caoutchouc de synthèse, un acide silicique en tant que charge et l'un des deux organosilanepolysulfanes suivants : Bis-(3-[dimethylethoxysilyl]-propyl) tetrasulfane et Bis-(3-[dimethylethoxysilyl]-propyl) disulfane.

2. Article moulé conforme à la revendication 1,
constitué par un pneumatique à air ou une surface de roulement de pneumatique.

3. Mélange de caoutchoucs,
**caractérisé en ce qu'**
il renferme 0,1 à 15 % en poids par rapport à la quantité de caoutchoucs mise en oeuvre d'organosilanes ayant la structure générale :
R¹R2R³Si-R⁴-Z
dans laquelle R¹ représente un éthoxy, R² et R³ représentent un méthyl, R⁴ représente un propyl ou un isobutyl et Z représente Sₓ-R⁴-SiR¹R²R³, x étant en moyenne statistique égal à 2 à 4, le mélange de caoutchoucs renfermant un caoutchouc de synthèse, un acide silicique en tant que charge et l'un des deux organosilane polysulfanes suivant : Bis-(3-[dimethylethoxysilyl]-propyl) tetrasulfane et Bis-(3-[dimethylethoxysilyl]-propyl) disulfane.
